# EUROPÄISCHE PATENTSCHRIFT

(11) **EP 2 733 339 B1**
(45) Veröffentlichungstag und Bekanntmachung des Hinweises auf die Patenterteilung: **29.07.2015**
(21) Anmeldenummer: 13005406.7
(22) Anmeldetag: 18.11.2013
(51) Int. Cl.: F02G 5/04

(54) **Vorrichtung zur Nutzung der Abwärme einer Brennkraftmaschine**
Device for utilisation of the waste heat of an internal combustion engine
Dispositif d'utilisation de la chaleur rejetée d'un moteur à combustion interne

(30) Priorität: 20.11.2012 DE 102012022865
(43) Veröffentlichungstag der Anmeldung: 21.05.2014
(73) Patentinhaber: IAV GmbH Ingenieurgesellschaft Auto und Verkehr, 10587 Berlin (DE)
(72) Erfinder: Arnold, Thomas, D-09366 Mitteldorf (DE); Werler, Andreas, D-08064 Zwickau (DE); Dingel, Oliver, D-09123 Chemnitz (DE)
(74) Vertreter: Fukala, Georg

(56) Entgegenhaltungen:
- EP-A1- 2 133 544
- EP-A1- 2 236 803
- US-A1- 2010 242 476
- US-A1- 2012 000 201

## Beschreibung

Die vorliegende Erfindung betrifft eine Vorrichtung zur Nutzung der Abwärme einer Brennkraftmaschine mit den Merkmalen des Patentanspruches 1.

Wie allgemein bekannt, ist es Ziel bei der Entwicklung von Brennkraftmaschinen, deren Kraftstoffverbrauch zu senken. Ein möglicher Ansatz dieses Ziel zu erreichen, ist die Nutzung der Abwärme der Brennkraftmaschine. Wie zum Beispiel aus der DE102011003487A1 vorbekannt, wird mittels eines Wärmetauschers in der Abgasanlage die im Abgas einer Brennkraftmaschine enthaltene Wärme auf ein flüssiges Medium übertragen, wobei das Medium verdampft und im weiteren Verlauf in einer Expansionsmaschine unter Abgabe von mechanischer Energie entspannt wird. Die mechanische Energie steht dann zum Beispiel für den Antrieb einer generatorisch arbeitenden elektrischen Maschine zur Verfügung. Nach der Expansion wird das Medium einem Kondensator zugeführt, wobei sich das Medium unter Abgabe von Wärme wieder verflüssigt. Die dabei frei werdende Wärme wird gemäß der DE102011003487A1 dem Kühlmittelkreislauf der Brennkraftmaschine zugeführt, so dass zum Beispiel die Warmlaufphase der Brennkraftmaschine verkürzt wird. Dabei ist es von Nachteil, dass die im Kühlmittel enthaltene Abwärme, insbesondere beim Betrieb der Brennkraftmaschine bei höherer Belastung, nicht zur Verbesserung des Wirkungsgrades dieses Systems herangezogen wird. Weiterhin ist es zum Beispiel aus der DE3208407A1 vorbekannt, einer Turbine das Abgas einer luftgekühlten Brennkraftmaschine zuzuführen und mittels der Turbine ein Kühlluftgebläse anzutreiben. Die mittels des Kühlluftgebläses geförderte Umgebungsluft umströmt die Zylinder der Brennkraftmaschine und nimmt einen ersten Anteil an Wärme auf und wird in einer Ausführung im weiteren Verlauf einem Wärmetauscher zugeführt, der mit der Abgasleitung der Brennkraftmaschine in Verbindung steht, so dass ein weiterer Anteil an Wärme auf die Umgebungsluft übertragen wird. Die auf diese Weise aufgeheizte Umgebungsluft kann z. B, als Heizmedium für ein Gebäude genutzt werden, So kann zwar ein Antrieb des Kühlluftgebläses durch die Brennkraftmaschine entfallen und der Wirkungsgrad des Systems positiv beeinflusst werden. Gemäß der US2012000201A1 ist eine Vorrichtung zur Nutzung der Abwärme einer Brennkraftmaschine Stand der Technik, wobei die Brennkraftmaschine ein Kühlsystem mit einem ersten Fluid aufweist und mittels des Kühlsystems Wärme auf das erste Fluid übertragen wird. Das Kühlsystem umfasst weiterhin einen Wärmetauscher, dem das erste Fluid zugeführt wird. Dem Wärmetauscher wird weiterhin ein zweites Fluid zugeführt, wobei mittels des Wärmetauschers von dem ersten Fluid Wärme auf das zweite Fluid übertragen und mittels einer Kraftmaschine das zweite Fluid unter Abgabe von mechanischer Energie entspannt wird. Derartige Vorrichtungen sind auch gemäß der EP2133544A1 und EP2236803A1 Stand der Technik. Gemäß der US20100242476A1 ist weiterhin ein Kraft-Wärme-Kreislaufsystem mit zwei getrennten Wärmequellen mit unterschiedlichen Temperaturen Stand der Technik. Dennoch wird auch wieder nicht konsequent möglichst viel Abwärme zur Verbesserung des Wirkungsgrades der Brennkraftmaschine genutzt. Es ist daher Aufgabe der vorliegenden Erfindung, eine Vorrichtung zu schaffen, die es erlaubt, möglichst viel Abwärme zur Verbesserung des Wirkungsgrades der Brennkraftmaschine zu nutzen. Diese Aufgabe wird mittels einer Vorrichtung zur Nutzung der Abwärme einer Brennkraftmaschine mit folgenden Merkmalen gelöst:
- die Brennkraftmaschine umfasst ein Kühlsystem mit einem ersten Fluid,
- mittels des Kühlsystems wird Wärme auf das erste Fluid übertragen,
- das Kühlsystem umfasst einen ersten Wärmetauscher,
- dem ersten Wärmetauscher wird das erste Fluid zugeführt,
- dem ersten Wärmetauscher wird weiterhin ein zweites Fluid zugeführt,
- mittels des ersten Wärmetauschers wird von dem ersten Fluid Wärme auf das zweite Fluid übertragen,
- das zweite Fluid wird stromabwärts des ersten Wärmetauschers einem Verdichter zugeführt,
- mittels des Verdichters wird das zweite Fluid verdichtet, wobei dem zweiten Fluid weiter Wärme zugeführt wird,
- der Verdichter wird von einer Turbine angetrieben,
- der Turbine wird zum Antrieb Abgas der Brennkraftmaschine zugeführt,
- das zweite Fluid wird stromabwärts des Verdichters einem zweiten Wärmetauscher zugeführt,
- dem zweiten Wärmetauscher wird weiterhin ein drittes Fluid zugeführt,
- mittels des zweiten Wärmetauschers wird von dem verdichteten zweiten Fluid Wärme auf das dritte Fluid übertragen,
- das dritte Fluid wird einem stromabwärts des zweiten Wärmetauschers angeordneten dritten Wärmetauscher zugeführt,
- dem dritten Wärmetauscher wird Abgas der Brennkraftmaschine zugeführt,
- mittels des dritten Wärmetauschers wird von dem Abgas Wärme auf das dritte Fluid übertragen,
- das dritte Fluid wird einer Kraftmaschine zugeführt,
- mittels der Kraftmaschine wird das dritte Fluid unter Abgabe von mechanischer Energie entspannt.

Mit anderen Worten werden erfindungsgemäß zur Verbesserung der Nutzung der Abwärme einer Brennkraftmaschine das Kühlsystem der Brennkraftmaschine mit einem Kühlmedium, und ein thermodynamischer Kreisprozess, insbesondere ein Clausius-Rankine-Kreisprozess, mit einem ersten Arbeitsmedium dadurch miteinander gekoppelt, dass die Wärme aus dem Kühlsystem in einem Zwischenschritt auf ein zweites Arbeitsmedium, bevorzugt Umgebungsluft, übertragen wird, welchem im weiteren Verlauf durch eine Verdichtung weiter Wärme zugeführt wird, wobei die für die Verdichtung notwendige Energie dem Abgas der Brennkraftmaschine entnommen wird, so dass das relativ niedrige Temperaturniveau des Kühlsystems der Brennkraftmaschine auf ein besser nutzbares Niveau angehoben wird, wobei dazu die im Abgas enthaltene Energie genutzt wird, für den Antrieb eines Verdichters, mit dem das Anheben des Temperaturniveaus erfolgt, Noch anders gesagt, werden der Kühlkreislauf der Brennkraftmaschine und der Abgasenergierückgewinnungskreislauf durch ein offenes oder geschlossenes Zwischensystem miteinander gekoppelt, welches eine Verdichtungsstufe umfasst, die durch die in dem Abgas der Brennkraftmaschine enthaltene Wärme angetrieben wird. Jedenfalls werden mittels der erfindungsgemäßen Vorrichtung gegenüber dem Stand der Technik sowohl die über das Kühlsystem von der Brennkraftmaschine an die Umgebung abgegebene Wärme, als auch die über das Abgassystem der Brennkraftmaschine an die Umgebung abgegebene Wärme zusammengeführt und einer anschließenden Umwandlung in mechanische oder elektrische Arbeit unterzogen. Das gelingt erfindungsgemäß durch die Nutzung eines Zwischenmediums, das nach Aufnahme der Wärme aus dem Kühlsystem einer Kompression unterzogen wird, wobei diese Kompression unter Nutzung der im Abgas enthaltenen Wärme erfolgt. Bevorzugt wird die Wärme aus dem Kühlsystem mittels eines bekannten Luft-Wasser-Wärmetauschers an die Umgebungsluft abgegeben, die von dem stromab des Wärmetauschers angeordneten Verdichter z. B. eines bekannten Abgasturboladers über diesen Wärmetauscher gefördert wird. Der Abgasturbolader umfasst, wie bekannt, eine Abgasturbine zum Antrieb des Verdichters. D. h. es kann erfindungsgemäß ein bewährtes Bauteil verwendet werden, um die Wärme aus dem Kühlsystem mit einem relativ niedrigen Temperaturniveau in den Kreislauf zur Nutzung der Abgaswärme mit einem relativ hohen Temperaturniveau einzukoppeln. Die erfindungsgemäße Vorrichtung kann zur noch weiteren Steigerung der Nutzung insofern erweitert werden, dass wenn die auf das Zwischenmedium übertragene Wärme an den Kreislauf zur Nutzung der Abgaswärme übertragen wurde, das Zwischenmedium über einer weiteren Turbine entspannt wird, so dass weitere Abwärme der Brennkraftmaschine in mechanische Energie umgewandelt wird, wobei diese mechanische Energie z. B. zum Antrieb eines Nebenaggregates oder zum zusätzlichen Antrieb des Verdichters zur Verdichtung des Zwischenmediums genutzt wird, wobei diese Turbine mit der Abgasturbine und dem Verdichter auf einer Welle angeordnet sein kann. In einer noch weiteren Ausführung kann das Zwischenmedium, nachdem es in der Turbine entspannt wurde, einem Wärmetauscher zugeführt werden, weicher zum Beispiel zur Klimatisierung eines Raumes, z. B. eines Fahrzeuginnenraumes verwendet wird.

Weitere vorteilhafte Ausgestaltungen der vorliegenden Erfindung sind dem nachfolgenden Ausführungsbeispiel sowie den abhängigen Patentansprüchen zu entnehmen.

Hierbei zeigt:

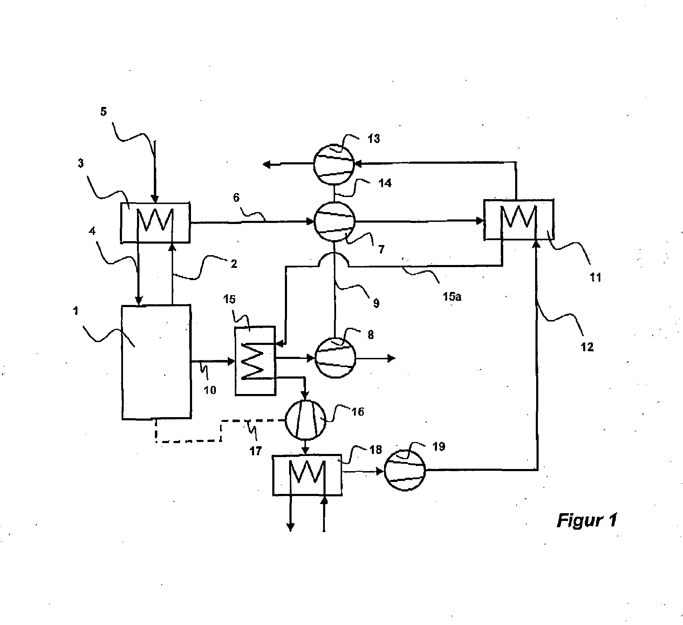

- Figur 1:: Darstellung der vorliegenden Erfindung.

Wie in Figur 1 gezeigt, umfasst eine Brennkraftmaschine 1 ein Kühlsystem mit einer Vorlaufleitung 2 von dem Kühlmantel der Brennkraftmaschine 1 zu einem ersten Wärmetauscher 3 und einer Rücklaufleitung 4 von dem ersten Wärmetauscher 3 zurück zu der Brennkraftmaschine 1. In dem Kühlsystem zirkuliert ein erstes Fluid, insbesondere allgemein bekanntes Kühlwasser. Ein Fluid kann, gemäß der allgemein bekannten Definition, flüssig oder gasförmig sein. Wie allgemein bekannt, umfasst der Kühlmantel der Brennkraftmaschine 1 u. a. Bereiche des Zylinderkopfes und des Zylinderkurbelgehäuses der Brennkraftmaschine 1. Denkbar ist es allerdings auch, dass das Kühlsystem mit weiteren zu kühlenden Bauteilen der Brennkraftmaschine 1 verbunden ist, zum Beispiel mit einem Wärmetauscher, der die in dem Schmieröl der Brennkraftmaschine 1 enthaltene Wärme an dieses Kühlsystem abgibt oder zum Beispiel mit einem Wärmetauscher, der dazu vorgesehen ist, die Wärme, die in dem Abgas enthalten ist, das der Verbrennung wieder zugeführt wird, an dieses Kühlsystem abzugeben. Denkbar ist auch die Einbindung eines Wärmetauschers in das genannte Kühlsystem, der dazu vorgesehen ist, den der Brennkraftmaschine 1 über die Ansauganlage zufließenden gasförmigen Medien, denen nach einer Verdichtung zur Steigerung der Leistung der Brennkraftmaschine 1 Wärme zugeführt wurde, wieder Wärme zu entziehen. Dem ersten Fluid wird also Abwärme der Brennkraftmaschine 1 aus dem Kühlsystem zugeführt, so dass in der Vorlaufleitung 2 bei dem Eintritt in den ersten Wärmetauscher 3 das erste Fluid eine Temperatur von z. B. 90 Grad Celsius aufweist. Dem ersten Wärmetauscher 3 wird weiterhin ein zweites Fluid zugeführt, wie durch den Pfeil 5 angedeutet. Das zweite Fluid ist bevorzugt Umgebungsluft. Das zweite Fluid weist beim Eintritt in den ersten Wärmetauscher 3 eine Temperatur von z. B. 20 Grad Celsius auf. Mittels des ersten Wärmetauschers 3 wird von dem ersten Fluid Wärme auf das zweite Fluid übertragen. Das so erwärmte zweite Fluid weist stromabwärts des ersten Wärmetauschers 3 eine Temperatur von z. B. 80 Grad Celsius auf und wird, insbesondere über eine Leitung 6, einem stromabwärts des ersten Wärmetauschers 3 in der Leitung 6 angeordneten Verdichter 7 zugeführt. Der Verdichter 7 ist z. B. als Radialverdichter ausgeführt. Mittels des Verdichters wird das zweite Fluid verdichtet, wobei dem zweiten Fluid weiter Wärme zugeführt wird, so dass das zweite Fluid stromabwärts des Verdichters 7 eine Temperatur von z. B. 300 Grad Celsius aufweist. Der Verdichter 7 wird von einer Turbine 8 über eine Welle 9 angetrieben. Die Turbine 8 ist in der Abgasanlage 10 der Brennkraftmaschine 1 angeordnet und wird von dem Abgas der Brennkraftmaschine 1 durchströmt bzw. wird die in dem Abgas enthaltene Abwärme mittels der Turbine 8 in mechanische Energie umgewandelt und steht zum Antrieb des Verdichters 7 bereit. Der Verdichter 7 kann auch zusätzlich zu dem Antrieb durch die Turbine 8 mittels einer nicht gezeigten elektrischen Maschine angetrieben werden, zum Beispiel wenn nicht ausreichend Wärme im Abgas enthalten ist. Das zweite Fluid wird stromabwärts des Verdichters 7 über die Leitung 6 einem zweiten Wärmetauscher 11 zugeführt. Dem zweiten Wärmetauscher 11 wird weiterhin ein drittes Fluid über eine Leitung 12 zugeführt. Das dritte Fluid ist ein, zur Ausführung eines thermodynamischen Kreisprozesses, insbesondere eines Clausius-Rankine-Kreisprozesses, geeignetes Fluid, wie zum Beispiel RB4a, Ethanol, Ammoniak oder Wasser bzw. Mischungen davon, wie etwa eine Mischung umfassend Ethanol und Wasser. Mittels des zweiten Wärmetauschers 11 wird von dem verdichteten zweiten Fluid Wärme auf das dritte Fluid übertragen. Das dritte Fluid ist zunächst flüssig und hat am Eintritt in den zweiten Wärmetauscher 11 eine Temperatur von z. B. 80 Grad Celsius und ist am Austritt des zweiten Wärmetauschers 11 gasförmig und hat eine Temperatur von z. B. 220 Grad Celsius. Das zweite Fluid hat am Austritt des zweiten Wärmetauschers 11 eine Temperatur von z. B. 100 Grad Celsius und wird entweder ohne einen weiteren Prozessschritt wieder an die Umgebung abgegeben oder aber über die weitergeführte Leitung 6 einer weiteren Turbine 13 zugeführt. Die Turbine 13 ist mittels einer Welle 14 mit dem Verdichter 7 verbunden, so dass der Verdichter 7 sowohl mittels der Turbine 8, als auch mittels der Turbine 13 angetrieben wird. Anstelle des Verdichters 7 kann mittels der Turbine 13, d. h. über die Welle 14, auch ein Nebenaggregat, wie z. B. ein Generator, angetrieben werden. Natürlich kann auch mittels der Turbine 13 allein oder durch eine Kombination der Turbine 8 und der Turbine 13, d. h. über die Welle 9 und die Welle 14, sowohl der Verdichter 7, als auch ein Nebenaggregat angetrieben werden. Das zweite Fluid hat am Austritt der Turbine 13 eine Temperatur von z. B. 30 Grad Celsius und wird z. B. einem nicht gezeigten Wärmetauscher zugeführt, welcher mit einem Raum in Verbindung steht, z. B. zur Klimatisierung dieses Raums. Denkbar ist es auch, dass das zweite Fluid nach dem Austritt aus dem zweiten Wärmetauscher 11 der Ansaugleitung der Brennkraftmaschine 1 zugeführt wird, so dass eine Aufladung der Brennkraftmaschine 1 erfolgt. Das dritte Fluid wird nach dem Austritt aus dem zweiten Wärmetauscher einem dritten Wärmetauscher 15 über eine Leitung 15a zugeführt. Dem dritten Wärmetauscher 15 wird Abgas über die Abgasleitung 10 zugeführt. Mittels des dritten Wärmetauschers 15 wird von dem Abgas Wärme auf das dritte Fluid übertragen. Das dritte Fluid hat am Austritt des dritten Wärmetauschers 15 eine Temperatur von z. B. 300 Grad Celsius, d. h. das gasförmige dritte Fluid wird überhitzt. Im weiteren Verlauf wird das dritte Fluid einer Kraftmaschine 16, beispielsweise einer Turbine oder einem Kolbenexpander zugeführt. Mittels der Kraftmaschine 16 wird das dritte Fluid unter Abgabe von mechanischer Energie entspannt und beispielsweise über eine Welle 17 ein Generator 18 angetrieben oder es wird über die Welle 17 die mechanische Energie auf die Kurbelwelle der Brennkraftmaschine 1 übertragen. Am Austritt der Kraftmaschine 16 ist das dritte Fluid noch immer gasförmig und hat eine Temperatur von z. B. 120 Grad Celsius. Im weiteren Verlauf wird das dritte Fluid einem Kondensator 18 zugeführt. Dort kondensiert das dritte Fluid und wird einem nicht gezeigten Tank zugeführt bzw. mittels einer Speisepumpe 19 über die Leitung dem zweiten Wärmetauscher 11 zugeführt. Denkbar ist es außerdem, stromabwärts der Speisepumpe 19 ein nicht gezeigtes Mischventil anzuordnen, das die Leitung 12 in zwei Teile teilt, nämlich einen Teil, der zu dem zweiten Wärmetauscher 11 führt und einen Teil, der zu einem nicht gezeigten Wärmetauscher führt, der stromabwärts der Turbine 8 in der Abgasleitung 10 angeordnet ist und mit dem Wärme aus dem Abgas auf das dritte Medium übertragen wird, so dass ein Teil des dritten Fluides z. B. einen Nassdampfzustand annimmt und am Austritt des nicht gezeigten Wärmetauschers eine Temperatur von z. B. 160 Grad Celsius aufweist sowie im weiteren Verlauf der Leitung 15a zugeführt wird und mit dem verbleibenden Teil des dritten Fluides wieder gemischt wird, wobei dieser Teil des dritten Fluides am Austritt des zweiten Wärmetauschers 11 eine Temperatur von 220 Grad Celsius hat und einen von dem anderen Teil des dritten Fluides unterschiedlichen Dampfzustand aufweist. Diese unterschiedlichen Dampfzustände können dann erfindungsgemäß vorteilhaft miteinander gemischt werden. Der Kondenstor kann mit dem Kühlsystem, umfassend die Vorlaufleitung 2, den Kühlmantel der Brennkraftmaschine 1, den ersten Wärmetauscher 3 und die Rücklaufleitung 4 verbunden sein, wie aus dem oben genannten Stand der Technik vorbekannt ist.

## Patentansprüche

1. Vorrichtung zur Nutzung der Abwärme einer Brennkraftmaschine mit folgenden Merkmalen:
- die Brennkraftmaschine (1) umfasst ein Kühlsystem mit einem ersten Fluid,
- mittels des Kühlsystems wird Wärme auf das erste Fluid übertragen,
- das Kühlsystem umfasst einen ersten Wärmetauscher (3),
- dem ersten Wärmetauscher (3) wird das erste Fluid zugeführt,
- dem ersten Wärmetauscher (3) wird weiterhin ein zweites Fluid zugeführt,
- mittels des ersten Wärmetauschers (3) wird von dem ersten Fluid Wärme auf das zweite Fluid übertragen, **gekennzeichnet durch** folgende Merkmale:
- das zweite Fluid wird stromabwärts des ersten Wärmetauschers (3) einem Verdichter (7) zugeführt,
- mittels des Verdichters (7) wird das zweite Fluid verdichtet, wobei dem zweiten Fluid weiter Wärme zugeführt wird,
- der Verdichter (7) wird von einer Turbine (8) angetrieben,
- der Turbine (8) wird zum Antrieb Abgas der Brennkraftmaschine (1) zugeführt,
- das zweite Fluid wird stromabwärts des Verdichters (7) einem zweiten Wärmetauscher (11) zugeführt,
- dem zweiten Wärmetauscher (11) wird weiterhin ein drittes Fluid zugeführt,
- mittels des zweiten Wärmetauschers (11) wird von dem verdichteten zweiten Fluid Wärme auf das dritte Fluid übertragen,
- das dritte Fluid wird einem stromabwärts des zweiten Wärmetauschers (11) angeordneten dritten Wärmetauscher (15) zugeführt,
- dem dritten Wärmetauscher (15) wird Abgas der Brennkraftmaschine (1) zugeführt,
- mittels des dritten Wärmetauschers (15) wird von dem Abgas Wärme auf das dritte Fluid übertragen,
- das dritte Fluid wird einer Kraftmaschine (16) zugeführt,
- mittels der Kraftmaschine (16) wird das dritte Fluid unter Abgabe von mechanischer Energie entspannt.

2. Vorrichtung nach Patentanspruch 1, **dadurch gekennzeichnet, dass** das erste Fluid Kühlwasser ist, das zweite Fluid Umgebungsluft ist und das dritte Fluid RB4a, Ethanol, Ammoniak, Wasser oder ein Gemisch aus Ethanol und Wasser ist.

3. Vorrichtung nach Patentanspruch 1 oder 2, **dadurch gekennzeichnet, dass** der Verdichter (7) ein Radialverdichter ist.

4. Vorrichtung nach Patentanspruch 1, 2 oder 3, **dadurch gekennzeichnet, dass** der Verdichter (7) zusätzlich zu dem Antrieb durch die Turbine (8) mittels einer elektrischen Maschine angetrieben wird.

5. Vorrichtung nach Patentanspruch 1, 2 oder 3, **dadurch gekennzeichnet, dass** das zweite Fluid nach Austritt aus dem zweiten Wärmetauscher (11) an die Umgebung abgegeben wird oder einer weiteren Turbine (13) zugeführt wird, die mittels einer Welle (14) mit dem Verdichter (7) verbunden ist, so dass der Verdichter (7) sowohl mittels der Turbine (8), als auch mittels der weiteren Turbine (13) angetrieben wird.

6. Vorrichtung nach Patentanspruch 1, 2 oder 3, **dadurch gekennzeichnet, dass** das zweite Fluid nach Austritt aus dem zweiten Wärmetauscher (11) einer weiteren Turbine (13) zugeführt wird, die mittels einer Welle (14) mit einem Nebenaggregat zu dessen Antrieb verbunden ist.

7. Vorrichtung nach Patentanspruch 1 bis 4, **dadurch gekennzeichnet, dass** das zweite Fluid nach dem Austritt aus dem zweiten Wärmetauscher (11) der Ansaugleltung der Brennkraftmaschine (1) zugeführt wird, so dass eine Aufladung der Brennkraftmaschine (1) erfolgt.

## Claims

1. Device for utilizing the waste heat of an internal combustion engine, having the following features:
- the internal combustion engine (1) comprises a cooling system with a first fluid,
- heat is transferred to the first fluid by means of the cooling system,
- the cooling system comprises a first heat exchanger (3),
- the first fluid is supplied to the first heat exchanger (3),
- a second fluid is furthermore supplied to the first heat exchanger (3),
- heat is transferred from the first fluid to the second fluid by means of the first heat exchanger (3), **characterized by** the following features:
- the second fluid is supplied to a compressor (7) downstream of the first heat exchanger (3),
- the second fluid is compressed by means of the compressor (7), heat further being supplied to the second fluid,
- the compressor (7) is driven by a turbine (8),
- exhaust gas from the internal combustion engine (1) is supplied to the turbine (8) for driving it,
- the second fluid is supplied to a second heat exchanger (11) downstream of the compressor (7),
- a third fluid is furthermore supplied to the second heat exchanger (11),
- heat is transferred from the compressed second fluid to the third fluid by means of the second heat exchanger (11),
- the third fluid is supplied to a third heat exchanger (15) arranged downstream of the second heat exchanger (11),
- exhaust gas from the internal combustion engine (1) is supplied to the third heat exchanger (15),
- heat is transferred from the exhaust gas to the third fluid by means of the third heat exchanger (15),
- the third fluid is supplied to a prime mover (16),
- the third fluid is expanded by means of the prime mover (16) so as to release mechanical energy.

2. Device according to Claim 1, **characterized in that** the first fluid is cooling water, the second fluid is ambient air and the third fluid is RB4a, ethanol, ammonia, water or a mixture of ethanol and water.

3. Device according to Claim 1 or 2, **characterized in that** the compressor (7) is a radial compressor.

4. Device according to Claim 1, 2 or 3, **characterized in that**, in addition to being driven by the turbine (8), the compressor (7) is driven by means of an electric machine.

5. Device according to Claim 1, 2 or 3, **characterized in that**, after it has emerged from the second heat exchanger (11), the second fluid is emitted to the surroundings or is supplied to a further turbine (13), which is connected to the compressor (7) by means of a shaft (14), such that the compressor (7) is driven both by means of the turbine (8) and by means of the further turbine (13).

6. Device according to Claim 1, 2 or 3, **characterized in that**, after it has emerged from the second heat exchanger (11), the second fluid is supplied to a further turbine (13), which is connected by means of a shaft (14) to an ancillary unit in order to be driven.

7. Device according to Claims 1 to 4, **characterized in that**, after it has emerged from the second heat exchanger (11), the second fluid is supplied to the intake line of the internal combustion engine (1), such that the internal combustion engine (1) is supercharged.

## Revendications

1. Dispositif d'utilisation de la chaleur perdue d'un moteur à combustion interne comprenant les caractéristiques suivantes :
- le moteur à combustion interne (1) comprend un système de refroidissement avec un premier fluide,
- la chaleur est transmise au premier fluide au moyen du système de refroidissement,
- le système de refroidissement comprend un premier échangeur de chaleur (3),
- le premier fluide est acheminé au premier échangeur de chaleur (3),
- un deuxième fluide est en outre acheminé au premier échangeur de chaleur (3),
- de la chaleur est transmise au deuxième fluide au moyen du premier échangeur de chaleur (3) depuis le premier fluide, **caractérisé par** les caractéristiques suivantes :
- le deuxième fluide est acheminé à un compresseur (7) en aval du premier échangeur de chaleur (3),
- le deuxième fluide est comprimé au moyen du compresseur (7), de la chaleur supplémentaire étant acheminée au deuxième fluide,
- le compresseur (7) est entraîné par une turbine (8),
- du gaz d'échappement du moteur à combustion interne (1) est acheminé à la turbine (8) en vue de l'entraînement,
- le deuxième fluide est acheminé en aval du compresseur (7) à un deuxième échangeur de chaleur (11),
- un troisième fluide est en outre acheminé au deuxième échangeur de chaleur (11),
- de la chaleur est transmise depuis le deuxième fluide comprimé au troisième fluide au moyen du deuxième échangeur de chaleur (11),
- le troisième fluide est acheminé à un troisième échangeur de chaleur (15) disposé en aval du deuxième échangeur de chaleur (11),
- du gaz d'échappement du moteur à combustion interne (1) est acheminé au troisième échangeur de chaleur (15),
- de la chaleur est transmise au troisième fluide depuis le gaz d'échappement au moyen du troisième échangeur de chaleur (15),
- le troisième fluide est acheminé à une machine motrice (16),
- le troisième fluide est détendu en fournissant de l'énergie mécanique au moyen de la machine motrice (16).

2. Dispositif selon la revendication 1, **caractérisé en ce que** le premier fluide est de l'eau de refroidissement, le deuxième fluide est l'air ambiant et le troisième fluide est du RB4a, de l'éthanol, de l'ammoniac, de l'eau ou un mélange d'éthanol et d'eau.

3. Dispositif selon la revendication 1 ou 2, **caractérisé en ce que** le compresseur (7) est un compresseur radial.

4. Dispositif selon la revendication 1, 2 ou 3, **caractérisé en ce que** le compresseur (7) est en outre entraîné au moyen d'une machine électrique en plus de l'entraînement par la turbine (8).

5. Dispositif selon la revendication 1, 2 ou 3, **caractérisé en ce que** le deuxième fluide, après sa sortie hors du deuxième échangeur de chaleur (11), est diffusé dans l'environnement ou est acheminé à une turbine supplémentaire (13) qui est connectée au moyen d'un arbre (14) au compresseur (7), de sorte que le compresseur (7) soit entraîné à la fois par la turbine (8) et la turbine supplémentaire (13).

6. Dispositif selon la revendication 1, 2 ou 3, **caractérisé en ce que** le deuxième fluide, après sa sortie hors du deuxième échangeur de chaleur (11), est acheminé à une turbine supplémentaire (13), laquelle est connectée au moyen d'un arbre (14) à un groupe auxiliaire en vue de l'entraînement de celui-ci.

7. Dispositif selon les revendications 1 à 4, **caractérisé en ce que** le deuxième fluide, après sa sortie hors du deuxième échangeur de chaleur (11), est acheminé à la conduite d'admission du moteur à combustion interne (1), de sorte qu'une suralimentation du moteur à combustion interne (1) se produise.
